# EUROPEAN PATENT SPECIFICATION

(11) **EP 3 125 247 B1**
(45) Date of publication and mention of the grant of the patent: **16.09.2020**
(21) Application number: 16181204.5
(22) Date of filing: 26.07.2016
(51) Int. Cl.: H04L 29/06, H04L 29/08

(54) **PERSONALIZED SOUNDTRACK FOR MEDIA CONTENT**
PERSONALISIERTE TONSPUR FÜR MEDIENINHALTE
BANDE SONORE PERSONNALISÉE POUR UN CONTENU MULTIMÉDIA

(30) Priority: 27.07.2015 US 201514809605
(43) Date of publication of application: 01.02.2017
(73) Proprietor: DISH Technologies L.L.C., Englewood, CO 80112 (US)
(72) Inventor: Newell, Nicholas, Centennial, CO 80112 (US); Khan, Omar A., Englewood, CO 80112 (US)
(74) Representative: LKGLOBAL Lorenz & Kopf PartG mbB Patentanwälte

(56) References cited:
- US-A1- 2006 130 121
- US-A1- 2009 171 995
- US-A1- 2010 306 805
- US-A1- 2010 329 638
- US-A1- 2012 041 954
- US-A1- 2013 345 841

## Description

### TECHNICAL FIELD

The following discussion generally relates to expanding the capabilities of broadcast, on-demand or other media content through personalization of songs rendered during playback.

### BACKGROUND

Consumers today have a large number of options in viewing television, movie and other media content. In addition the wealth of content that is available, consumers are able to view their preferred content at virtually any desired place, and at any desired time. Many set top boxes and other media devices currently offer time and place shifting features, for example, that can greatly enhance the availability and convenience of content delivery and playback.

As effective as these modern features can be in delivering content, however, they are not typically able to improve the enjoyability of the content itself. Many media viewers, for example, may find that they dislike a particular movie or television program simply due the music played in the soundtrack. Even though the music may be selected to appeal to as many viewers as possible, the song selections can nevertheless be unappealing to large numbers of potential viewers. This can provoke negative emotional experiences for those viewers who dislike some or all of the songs in the program's soundtrack.

Document USA96754607 discloses a solution for analyzing metadata in comparison with one or more preferences accessible from a local user profile; from the analysis, selecting at least one of the one or more alternate media; and presenting the media file with the at least one of the one or more alternate media replacing a primary media.

Document US2006130121 discloses a system and method for creation, synchronisation and delivery of alternate content for dynamic substitution of unwanted video or audio on a scene-by-scene basis. Document US2013345841 discloses that when a primary soundtrack associated with the video is played, a user computing device, operated by the viewer, determines a secondary soundtrack that corresponds to the primary soundtrack.

### BRIEF SUMMARY

It is therefore desirable to provide systems, devices and/or processes that improve the user experience through improved customization of the program's soundtrack. The object of the present invention is solved by the subject-matter of the independent claims, wherein further embodiments are incorporated in the dependent claims. These and other desirable features and characteristics will become apparent from the subsequent detailed description and the appended claims, taken in conjunction with the accompanying drawings and this background section.

Systems, devices and methods are described to provide a personalized soundtrack in which songs played during media programs are selected by set top boxes, media players and/or other media receiver devices based upon user preferences and metadata associated with the program itself.

In one embodiment, a set top box, television receiver, media player or other receiver device obtains viewer preference data that describes the viewer's musical preference. The media program received by the receiver device is associated with metadata describing at least some of the songs in the program soundtrack. The media receiver device compares the viewer preference data and the metadata about the songs already in the soundtrack to select replacement songs that are rendered to the viewer during playback of the media program instead of the songs in the audio soundtrack of the media program.

In another embodiment, a media receiver device processes media content for viewing on a display by a viewer. The media receiver device comprises a receiver interface, a processor and a display interface. The receiver interface is configured to receive a media program for playback by the media receiver device. The media program comprises a video program and an audio soundtrack accompanying the video program comprising a plurality of songs, and is associated with metadata describing each of the plurality of songs. The controller is configured to obtain viewer preference data that describes a musical preference of the viewer and to select a replacement song by comparing the viewer preference data and the metadata. The display interface is configured to provide the media program from the media receiver device for playback to the viewer, wherein the media program is provided with the replacement song selected based upon the viewer preference data in place of one of the plurality of songs in the audio soundtrack of the media program.

According to an example, a method is provided that is executable by a media receiver device that is operated by a viewer. The method comprises the following steps:
- obtaining viewer preference data by the media receiver device that describes a musical preference of the viewer;
- receiving a media program for playback by the media receiver device, the media program comprising a video program and an audio soundtrack accompanying the video program comprising a plurality of songs, and wherein the media program is associated with metadata describing each of the plurality of songs;
- selecting, by the media receiver device, a replacement song to be rendered to the viewer during playback of the media program by comparing the viewer preference data and the metadata; and
- providing the media program from the media receiver device for playback to the viewer with the replacement song selected based upon the viewer preference data provided in place of one of the plurality of songs in the audio soundtrack of the media program.

In a further example, the obtaining comprises analyzing a musical library managed by the viewer to determine attributes of songs in the musical library.

In a further example, the selecting comprises selecting the replacement song from a musical library managed by the viewer by comparing the metadata to the determined attributes of the songs in the musical library.

In a further example, the selecting comprises selecting a plurality of potential replacement songs from a musical library managed by the viewer by comparing the metadata to the determined attributes of the songs in the musical library, and wherein the selecting further comprises selecting one of the plurality of potential replacement songs as the replacement song based upon the viewer preference data.

In a further example, the metadata describing each of the plurality of song describes at least one mandatory attribute for that song, and wherein the selecting comprises selecting a plurality of potential replacement songs from a musical library managed by the viewer by comparing the metadata to the determined attributes of the songs in the musical library to find potential replacement songs having the same at least one mandatory attribute, and wherein the selecting further comprises selecting one of the plurality of potential replacement songs as the replacement song based upon the viewer preference data.

In a further example, the selected song from the musical library is identified as a potential replacement song in the metadata.

In a further example, the obtaining comprises receiving inputs from the viewer describing the viewer's musical preferences.

In a further example, the media program is received with a matrix of songs, and wherein the metadata comprises attributes of each of the songs in the matrix to thereby permit the media receiver device to select one of the songs in the matrix for rendering to the viewer based upon the viewer preference data in place of the one of the plurality of songs in the audio soundtrack of the media program.

In a further example, the songs are delivered to the media receiver device with the metadata.

In a further example, the metadata is delivered to the media receiver device with the media program.

In a further example, the metadata is delivered to the media receiver device using an out-of-band channel associated with an electronic program guide of the media receiver device.

In a further example, the method further comprises updating a log that maintains a count of a number of times that the replacement song has been provided to the viewer.

According to a further example, a media receiver device to process media content for viewing on a display by a viewer is provided. The media receiver device comprises: a receiver interface configured to receive a media program for playback by the media receiver device, the media program comprising a video program and an audio soundtrack accompanying the video program comprising a plurality of songs, and wherein the media program is associated with metadata describing each of the plurality of songs; and a controller configured to obtain viewer preference data that describes a musical preference of the viewer and to select a replacement song by comparing the viewer preference data and the metadata; as well as a display interface configured to provide the media program from the media receiver device for playback to the viewer, wherein the media program is provided with the replacement song selected based upon the viewer preference data in place of one of the plurality of songs in the audio soundtrack of the media program.

In a further example, the metadata is delivered to the media receiver device separately from the media program.

In a further example, the metadata is delivered to the media receiver device via an out-of-band signal that is received via the receiver interface along with the broadcast television signal.

In a further example, the replacement song is selected from a musical library managed by the viewer by comparing the metadata to the determined attributes of the songs in the musical library.

In a further example, a plurality of potential replacement songs is selected from a musical library managed by the viewer by comparing the metadata to the determined attributes of the songs in the musical library, and wherein the replacement song is selected from the plurality of potential replacement songs based upon the viewer preference data.

In a further example, the metadata describing each of the plurality of song describes at least one mandatory attribute for that song, and wherein a plurality of potential replacement songs are selected from a musical library managed by the viewer by comparing the metadata to the determined attributes of the songs in the musical library to find potential replacement songs having the same at least one mandatory attribute, and wherein one of the plurality of potential replacement songs is selected as the replacement song based upon the viewer preference data.

In a further example, the processor updates a log that maintains a count of a number of times that the replacement song has been provided to the viewer.

In a further example, the processor updates a log that maintains a listing of replacement songs.

Additional embodiments, aspects and other features are described in more detail below.

### BRIEF DESCRIPTION OF THE DRAWING FIGURES

Exemplary embodiments will hereinafter be described in conjunction with the following drawing figures, wherein like numerals denote like elements, and
FIG. 1 is a block diagram of an example system for creating, delivering and presenting a personalized soundtrack for a media viewer;
FIG. 2 is a diagram showing an example of metadata that may be collected for a song appearing in a program soundtrack; and
FIG. 3 is a flowchart of an example process for creating a personalized soundtrack for a media program.

### DETAILED DESCRIPTION

The following detailed description is merely illustrative in nature and is not intended to limit the invention or the application and uses of the invention. Furthermore, there is no intention to be bound by any theory presented in the preceding background or the following detailed description, which describes several example embodiments. Other embodiments may supplement or modify the examples described herein in any number of different ways.

According to various embodiments, viewers are able to enjoy television programs, movies and/or other media content with soundtracks that have been customized to the viewers' own preferences. If a viewer dislikes certain songs, artists or types of music, for example, the viewer's television receiver can recognize such preferences and replace certain songs with more appealing music during playback for that viewer. To that end, the media receiver device compares viewer preference data with metadata about the songs in the media programming to select songs for the soundtrack that are more likely to be enjoyable to the viewer.

Media programs are appropriately associated with content matrices that describe the songs contained within the programs and/or that provide other song alternatives that have similar characteristics as the default song and/or that could be otherwise rendered in place of the default song. The viewer's receiver device compares the songs that are available in the matrix and selects one of the songs for playback during the program based upon the viewer's preferences. If a viewer is known to like pop music but to dislike country music, for example, then a country song that would ordinarily appear in a movie or television program soundtrack could be replaced with a suitable pop song having similar emotional feel, volume, tempo and/or the like. The replacement song could be selected from the matrix in some implementations, and/or from a viewer's own music library, as desired. Further embodiments could use the features described herein to offer the song as a download or other copy for sale, or to provide feedback about user music preferences, as desired.

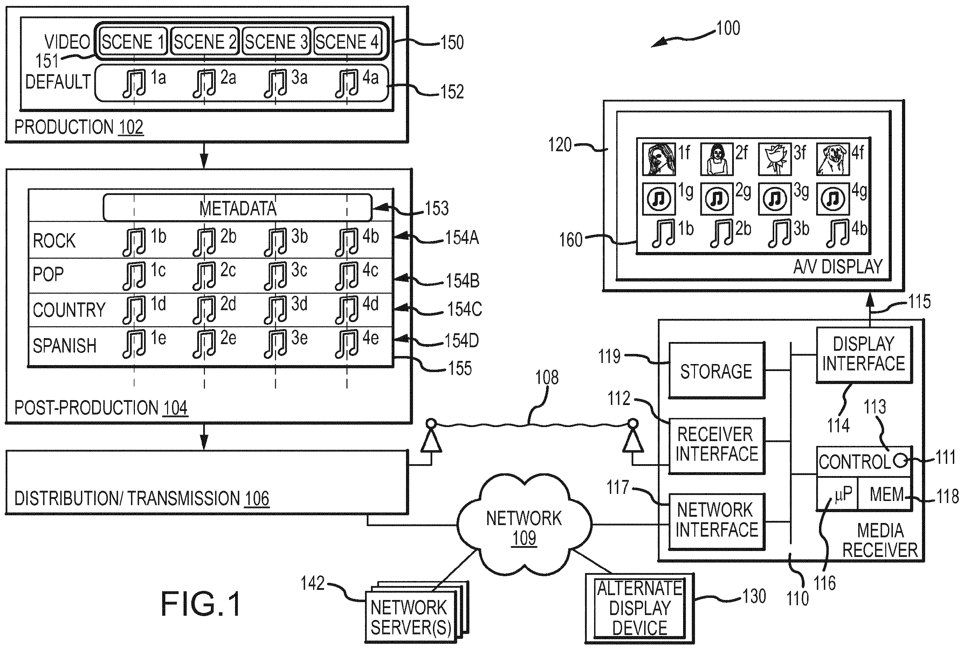

Song matrices for movies, television programs and other media programs are appropriately formulated by the content producer, by a broadcaster and/or by any other party, including an independent third party. In the example shown in FIG. 1, a content producer 102 creates a movie, television program or other media program 150 that includes a video track 151 and a soundtrack 152 that features one or more songs. Generally speaking, the songs within soundtrack 152 will serve as the default songs for playback. Default soundtrack 152 maybe the conventional audio track provided with an MPEG multiplex or the like. In some embodiments, it may be desirable to separate any dialog and other audio content that would be played over the musical score into a separate audio stream to facilitate convenient replacement.

Additional audio information 155 may be created during post-production 104 in any manner. In some embodiments, the additional audio information 155 is created by the content producer 102 itself; this could allow a producer to select the songs that would be offered as potential replacements. Additional information 155 may be equivalently created by a content distributor 106 (e.g., a television broadcaster, cable operator, direct broadcast satellite (DBS) operator, video streaming service operator and/or the like), or by any other party as desired. Replacement songs can therefore be selected by any other party or system, as desired.

Generally speaking, the additional audio information 155 associated with a video program 150 may include metadata 153 about the various songs in the default soundtrack 152 and/or any number of additional songs as desired. In the example illustrated in FIG. 1, the additional audio information 155 includes metadata 153 about several other song alternatives 154A-D, including a rock alternative 154A, a pop alternative 154B, a country alternative 154C and a Spanish or other foreign language alternative 154D. Each category 154A-D would include songs that could substitute for songs in the default soundtrack 152, and additional or alternate categories 154 could be provided as desired. Metadata 153 therefore allows individual receiver devices 110 to select alternative songs that may be more appealing to particular viewers while still matching the important characteristics of the default song in soundtrack 152.

In some embodiments, the replacement songs themselves are provided within the supplemental audio data 155. Songs may be provided in any lossy or lossless format, such as MP3, AAC, Windows Media, FLAC and/or the like. Such songs may be compressed and encoded as appropriate for delivery with metadata 153 in any manner, as described more fully below.

Metadata 153 and other supplemental audio data 155 may be delivered to receiver devices 110 associated with different viewers in any manner. In some embodiments, the supplemental data is broadcast 108 via a cable, terrestrial or DBS television link. The content may be included within an MPEG multiplex of program 150, for example, in some implementations. Alternately, supplemental content 155 may be broadcast out-of-band on link 108 as part of an electronic program guide (EPG) signal or other control feature of a DBS, cable or other television distribution system. Still other embodiments could make supplemental content 155 available via a network server 142 for retrieval over the Internet or another network 109, as desired. In many implementations, the MPEG multiplex or other packaging format for program 150 may include URLs or other locator information that allows the receiver device 110 to obtain needed data 155 via network 109, link 108 or another channel as appropriate. Such URLs or other locators may be included within closed caption or timed text data delivered with the program 150, within EPG data separately broadcast to receiver 110, or in any other manner as desired.

Different receiver devices 110 that are operated by different viewers can each select particular songs from each category based upon preferences of the particular viewer. Viewer preferences may be determined based upon viewer inputs, based upon analysis of a viewer's personal song library, or based upon any other information. If viewer preferences indicate that the viewer prefers rock or pop songs to the songs that are contained in the default soundtrack 152, for example, then the receiver device 110 renders a different song from the appropriate category 154A-B in place of the default song. Other receiver devices 110 may select the default song(s) and/or songs from other categories 154A-D as determined by the preferences of each individual viewer. To that end, different viewers watching the same program may experience different songs during playback, with each viewer experiencing a song that is selected by the viewer's own receiver device 110 based upon that viewer's own personal preferences. Further embodiments could use more sophisticated techniques to identify viewer preferences and/or to select particular songs for playback, as described more fully below.

In the example illustrated in FIG. 1, production system 102, post-production system 104 and distribution system 106 represent any systems, devices and/or organizations capable of producing, distributing and/or transmitting program content, respectively. As noted above, supplemental audio information 155 may be inserted into the programming content in any manner at any stage of production, post-production, distribution and/or transmission. Certain producers, distributors and/or broadcasters may have preferred formats for metadata or other supplemental data 155, and each may produce, distribute and/or broadcast content using their own formats as desired. The format of data 155 may change from program to program, or may be consistent for each producer, distributor, broadcaster or other entity. All of the programs broadcast on a particular channel, for example, may have a common format for data 155 that may nevertheless differ from the format used by another network or channel. Supplemental data 155 may therefore be formatted in any standard or non-standard way, as desired.

Supplemental data 155 and/or metadata 153 may be encoded into or otherwise associated with any sort of programming 150 in any manner, such as during a conventional "post production" phase or the like. Creation and formatting of metadata 153 during or just after production may be appropriate in many types of programming, including cinema programming, television programming or any other programming that is delivered in any sort of standard format, such as any form of MPEG format that can be rendered by a player/receiver device 110. In other embodiments, however, supplemental audio data 155 may be added to programming during intermediate distribution (e.g., encoding or transcoding of programming that is stored onto DVDs or other portable media, or otherwise distributed to network affiliates, broadcasters, video on demand services, video streaming services and/or any other parties). In still other embodiments, supplemental audio data 155 may be created and/or associated with the program stream just prior to broadcast or other transmission 108. Supplemental data 155 may also be inserted by receiver 110 prior to placeshifting or other streaming of a network video stream, or in any other setting as desired. Typically, supplemental data 155 is formatted and automatically associated with the program stream by computerized machinery to so that the content is digitally represented, formatted and stored on any appropriate media prior to transmission or other distribution.

To that end, distribution channel 108 may represent any sort of data link, broadcast or other wireless connection, physical media, and/or other avenue for delivering programming content. Examples of distribution channels include, without limitation, broadcast television, very small aperture terminal (VSAT) satellite (e.g., for movie distribution), direct broadcast satellite (DBS), cable television, cellular or other wireless telephone networks, Internet or other data communications networks, and/or the like. Again, supplemental data 155 may be inserted into or otherwise associated with programming content in any manner, and at any phase of production, post-production, distribution and/or delivery of the programming content. Indeed, supplemental data 155 need not be delivered with the video content itself, but rather may be retrieved from a separate server (e.g., server 142) and/or any other source of information, as desired.

Receiver 110 is any device, component, circuitry or logic capable of receiving and processing media program content. Typically receiver 110 is a user-operated device that is physically located within a home, office or similar premises. In various embodiments, media receiver 110 may be implemented as a television receiver, a media player, a video game player, or another media playback device as appropriate. In some implementations, receiver device 110 is a set top box or similar television receiver that receives broadcast content via direct broadcast satellite (DBS), terrestrial broadcast, cable broadcast or the like. In such cases, the received content will generally be provided as an MPEG or similar multiplex with separate streams for video, audio, timed text and the like in which audio and video contents are synchronized for playback using a presentation time stamp (PTS) or the like.

As shown in FIG. 1, receiver 110 includes a receiver interface 112, a controller 113 with appropriate processor 116 and memory 118 resources, and a display interface 114 as appropriate. Various embodiments may also include a storage medium 119 and/or a network interface 117 for communicating on network 109, as appropriate. In various embodiments, receiver 110 is a conventional television receiver (e.g., a set top box or other broadcast, satellite and/or cable television receiver) capable of receiving signals via distribution channel 108 and of providing an output signal 115 that can be displayed to the viewer. In various embodiments, display 120 is any sort of television or other video monitor that is capable of receiving a program signal 115 from a set-top box, decoder or other external receiver 110 as desired. Display 120 may include integrated audio playback features (amplifiers, speakers, etc.), or audio may be rendered to the viewer via a separate audio system, as desired.

Receiver interface 112 is any hardware, firmware and/or software interface capable of receiving programming content. In various embodiments, receiver interface implements a demodulator/decoder feature for receiving and demodulating digital television programming over a terrestrial broadcast, satellite, and/or cable programming medium.

The example television receiver 110 illustrated in FIG. 1 includes a storage medium 119, as appropriate. Storage medium 119 may be implemented as additional memory, as a disk drive, or in any other manner. Many embodiments may provide a digital video recorder (DVR) or other recording feature that allows content to be stored in storage medium 119 for later viewing. Such content may be stored with metadata 153 and/or additional supplemental data 155 to allow for decoding and viewing of alternate audio content at the time that the programming stored on the recorder is rendered. That is, data may be stored to allow replacement audio to be provided even during time shifted playback, as desired. Equivalent embodiments could store programming data and/or supplemental data 155 in memory 118, and/or in any other memory, disk or other storage medium available to receiver 110.

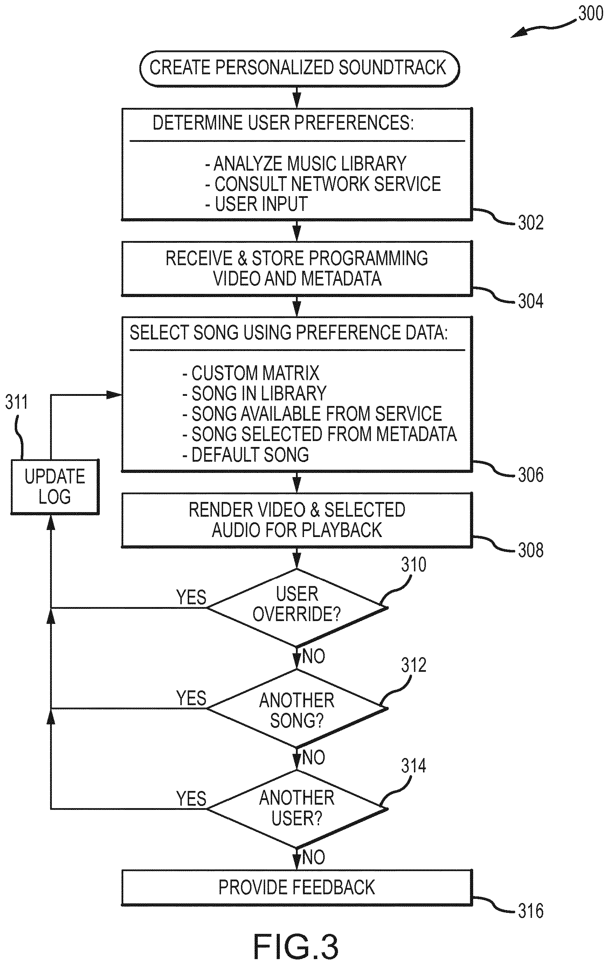

Controller 113 is any sort of control logic or the like that interacts with receiver interface 112 and display interface 114 to output video and audio content to the viewer. In the example shown in FIG. 1, controller 113 also controls the reception, storage and processing of video content via receiver interface 112. To that end, controller 113 suitably directs the reception and storage of program content 150, as well as the selection of alternate audio content to be rendered with the received programming. Additional detail about such processing is provided below with respect to FIG. 3.

In various embodiments, controller 113 may be implemented using any sort of microprocessor, microcontroller, digital signal processor or other processor 116 capable of directing the actions and processes of receiver 110. Typically, processor 116 will be associated with any sort of memory 118, such as any sort of static, dynamic, flash or other memory capable of storing programming instructions and/or data for processing by processor 116. In various embodiments, receiver 110 is based upon a "system on chip" (SoC) implementation that incorporates a hybrid microcontroller 116 with memory 118, input/output and/or other features to perform the various signal processing and other actions of receiver 110. Various SoC and other integrated hardware implementations are available from Texas Instruments, Conexant Systems, Broadcom Inc., and many other suppliers as appropriate. Other embodiments may implement processor 116 and/or memory 118 using any sort of application specific integrated circuit (ASIC) or the like. Still other embodiments may implement processor 116 and/or the other features of receiver 110 with any number of discrete and/or integrated processing components (e.g., any sort of microprocessor or microcontroller), memories 118, input/output features and/or other features as desired.

Display interface 114 is any physical and/or logical interface to display 120. As noted above, in some implementations receiver 110 and display 120 are provided in an integrated product (e.g., a conventional television). In other embodiments wherein receiver 110 provides video output signals 115 to an external display 120, such signals 115 may be provided in any compatible format. In embodiments wherein display 120 is a conventional television, for example, display interface 114 may provide video output signals 115 in any conventional format, such as component video, composite video, S-video, High-Definition Multimedia Interface (HDMI, e.g., any version of the CEA-861 standards), Digital Visual Interface (DVI), IEEE 1394, universal serial bus (USB) and/or any other formats as desired.

Display 120 is any sort of television, monitor and/or other display capable of presenting video imagery to a viewer. In various embodiments, display 120 operates in conjunction with receiver 110 to generate video imagery and audio sounds in any manner. Other embodiments may combine the functions and components of receiver 110 and display 120 into a common housing, as in a conventional television with a built-in tuner or other receiver, or in a computer system. As noted above, display 120 may include integrated audio playback features (e.g., amplifier, loudspeakers and/or the like). Equivalently, audio may be provided via a stereo receiver or other audio system.

Network interface 117 operates using any implementation of protocols or other features to support communication by device 110 on network 109. In various embodiments, network interface 210 supports conventional LAN, WAN or other protocols (e.g., the TCP/IP or UDP/IP suite of protocols widely used on the Internet) to allow device 110 to communicate on network 109 as desired. Network interface 117 typically interfaces with network 109 using any sort of LAN adapter hardware, such as a conventional network interface card (NIC) or the like provided within device 110. Network interface 117 could be implemented with a conventional ETHERNET controller chip that operates with a conventional electrical transformer to communicate over a conventional RJ45 jack in at least one embodiment, although other embodiments may provide different features, including any sort of WI-FI or other wireless interface as desired.

In practice, then, receiver 110 suitably receives television-type programming in any format or medium. The programming may be received at receiver interface 112 from any broadcast or other transmission source, from any sort of streaming or portable media source, via a stored media format (e.g., a DVD or Blu-Ray disc) and/or via any other distribution channel 108. The programming is provided with (or at least associated with) supplemental audio data 155 that includes metadata 153 about the songs that are provided in the program soundtrack 152. This information 155 is interpreted by the receiver device 110 to select audio tracks that are likely to be appealing to the particular viewer, as described more fully below. Audio and video content may be further processed in conjunction with any user preference or other information to generate suitable imagery and sound to thereby present the received program to the viewer with the customized personal soundtrack 160, as desired.

As noted above, supplemental audio data 155 may be delivered to the receiver 110 in any manner. In various embodiments, data 155 is provided through the same distribution channel 108 as the program itself, such as through a closed caption or other text stream associated with an MPEG multiplex. Data 155 may be equivalently delivered as part of the out-of-band data generally associated with an electronic program guide or the like. Such data may be delivered to receiver device 110 via an out-of-band signal that is separate from programming signals, but using the same DBS, cable or other distribution channel 108 used to deliver the programming signals, as desired.

In other embodiments, data 155 may be delivered to device 110 from a separate source via a backchannel such as the Internet, a telephone link, and/or another data communications network. Such embodiments may provide data 155 from a server 142 operating on the network 109 that delivers data 155 in response to requests placed by receiver 110, as desired. Such requests may be posited on a batch basis and/or on an as-needed basis, as described more fully below.

Receiver device 110 may support other functions and features in addition to those described above. In various embodiments, device 110 includes a digital video recorder (DVR) feature that stores broadcast programs to storage 119 or the like for time shifted viewing. Device 110 may also support live or delayed encoding/transcoding of received programs for place shifting to a remote device 130, such as a notebook, tablet or other computer, or a mobile phone, video game player or other media device. In such embodiments, supplemental audio data 155 may be stored with the content on the DVR 119 and/or place shifted along with the audio and video content so that that time shifted and/or place shifted video stream is nevertheless able to support the audio replacement features described herein.

To that end, supplemental audio data 155 may be stored in a DVR 119, forwarded to a second screen or other display device 130 via placeshifting, and/or otherwise processed along with the video program 150, as desired. Whenever and wherever the video program 150 is decoded, the supplemental data 155 may be similarly interpreted so that alternative audio content "follows" the video programming. If a user stores a broadcast program on a DVR 119 for later viewing, for example, the audio content may still be interpreted at the time of playback so that any replacement songs can be retrieved and/or processed as desired. Similarly, other media players 130 that obtain placeshifted streams or encoded media files from receiver 110 may be similarly programmed to interpret the supplemental data 155 in the same manner as receiver 110. That is, second screen device 130 can interpret supplemental data 155 to provide alternative audio content that is preferred by the particular viewer on the display associated with the device 130, as desired. Equivalently, one or more replacement audio tracks may be encoded into a placeshifted media stream by receiver 110 or another device, as desired. The supplemental audio data 155 may therefore be retrieved and/or interpreted at any time and location of playback, thereby allowing soundtrack personalization whenever and wherever the media stream is encoded or played back to any viewer having any musical preferences.

Supplemental audio data 155 may be formatted in any manner. In various embodiments, data 155 may be described in an XML schema or the like that describes the various types and locations of specific data types within a larger data structure. As noted above, data 155 may be delivered within the distribution channel 108 in some embodiments, whereas equivalent embodiments could download the data 155 from an external service 142, or deliver the data 155 using an EPG or similar out-of-band transmission over broadcast medium 108.

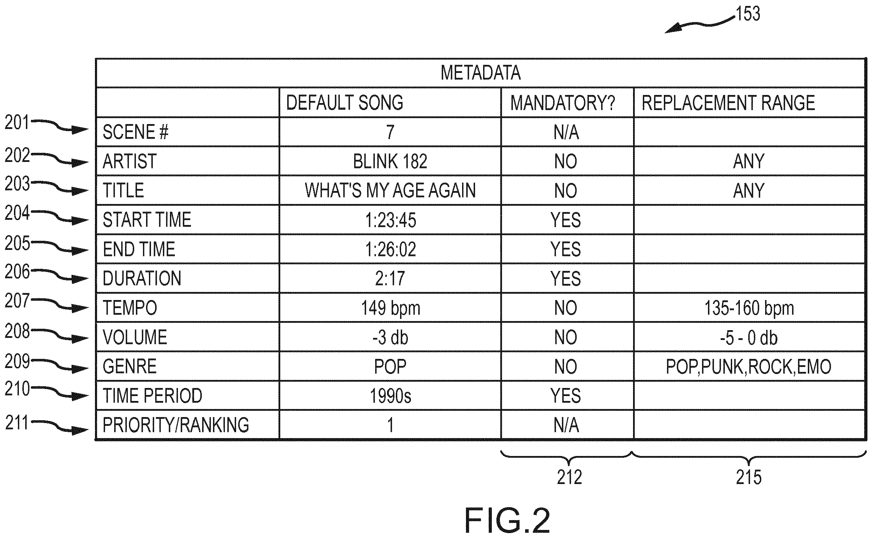

Audio data 155 typically includes metadata 153 that is used to describe the various songs in the default soundtrack 152. Metadata 153 may also describe one or more alternative song options, as desired. With reference now to FIG. 2, example metadata 153 for each song could include identifying information describing the song, timing information that directs the receiver 110 to render songs at the appropriate times, song attributes that allow the receiver 110 to select replacement songs, and/or any other information as appropriate. The example illustrated in FIG. 2 is intended to show various types of information that may be maintained within metadata 153; equivalent embodiments could use alternate information, additional information, and/or information formatted in any other manner as desired.

Metadata 153 includes sufficient identification and timing information to allow the receiving device 110 to select a suitable replacement song and to play the replacement song at the appropriate time. To that end, the example shown in FIG. 2 includes a start time identifier 204, as well as an end time identifier 205 and/or a duration 206. Times may be indicated in any manner, such as with presentation time stamps (PTS) tied to MPEG video 151, in second or other units elapsed since the start of the program 150, and/or the like. Identification information may also include a song or scene number 201 that sequentially or otherwise identifies different parts of program 150 that include musical content, as desired.

Metadata 153 may also include information about each song that allows the receiving device 110 to select an appropriate replacement that is likely to be pleasing to the listener. In various embodiments, metadata 153 includes information such as a genre indictor 209 that identifies a song type (e.g., "rock", "pop", "jazz", "Spanish", "Korean", etc.). In some implementations, a viewer may prefer one genre of music over another; a genre indication can be very helpful in selecting songs of that type. Other embodiments may additionally or alternately provide other information about the song, such as the song tempo 207, volume 208, dynamic range, mood, date or time period 210 (e.g., "seventies", "eighties", "pre-War", "current", etc.). In various embodiments, receiving device 110 can use this information to select other songs having similar characteristics from a viewer's personal library, from a network service, and/or from any other source.

Various embodiments could additional identify songs using any sort of song-identifying information in metadata 153. Such information could include information such as a song title 203, artist 202, album name and/or the like. This identifying information could be presented to the viewer in any manner to allow the viewer to purchase the song, or simply to let the viewer know what he or she is listening to during playback. Such information could be presented on a second screen 130, as an overlay on display 120, or in a separate interface that is presented separately from the presentation of program 150. Song identification information may not be needed in all embodiments, but providing such information can facilitate additional features for the viewer, including convenient song purchasing and the like.

As noted above, receiving device 110 suitably uses the metadata 153 to select appropriate replacement songs that correspond to the viewer preference data. The particular metadata 153 that is provided in an embodiment will depend upon the algorithm used to select the replacement songs. If songs are simply selected based upon genre, for example, then the metadata 153 may simply indicate the genres of the songs in the default soundtrack 152, thereby allowing receiver 110 to replace songs from genres that are not enjoyable to certain listeners. Other embodiments may use additional metadata 153 to allow receiving device 110 to perform more sophisticated analysis, as desired.

Various embodiments may also include "mandatory" flags 212 for one or more attributes, as desired. The mandatory flag may be set by the producer of program 150 or by another party to prevent replacement of certain songs, or to ensure that certain features of the song are preserved. For example, if a particular feature of a song is considered to be "mandatory", then the flag can be set to ensure that any replacement songs have the same feature. A producer could determine, for example, that replacement songs must come from the same time period as the default song. In such cases, a mandatory flag 212 that is associated with the time period attribute 210 could be set to ensure that any replacement songs were selected from the same time period. In the example of FIG. 2, the start time 204, end time 205 and duration 206 attributes are also marked as "mandatory", thereby indicating that variance from these parameters is not allowed. This could be used, for example, to ensure that any replacement songs have sufficient duration to play for the "mandatory" time period, and that the replacement songs are rendered at the appropriate time. Other attributes 201-211 could be selected as "mandatory", as desired for the particular embodiment.

Still further embodiments could provide replacement ranges 215 for one or more attributes, as desired. These replacement ranges could define boundary values or other limits on any songs that are selected as replacements. In the example of FIG. 2, the tempo attribute 207 is illustrated with a permissible replacement range of 135-160 bpm, indicating that any replacement songs should have tempos within this range. Ranges of acceptable replacements may be formatted in any manner, and processed as desired.

As noted above, supplemental audio data 155 may also include the songs 154A-D themselves encoded in any format. By providing the encoded audio content along with the metadata 153 itself, this ensures a selection of audio tracks will be available to each device 110 that receives the program. Including the audio data can consume bandwidth on link 108 and/or network 109, however, so it may be desirable in some embodiments to instead obtain songs from the viewer's song library, if the library is available to the device 110.

Supplemental audio data 155 is typically encoded by a computerized data processing system having a processor, memory and suitable input/output capabilities as would be found on a conventional computer workstation. A software program executing on the processor could receive user inputs relating to song alternatives, or songs could be automatically analyzed to determine tempo, dynamic range, instrumentation, volume, musical style and/or the like. Alternate songs may be manually selected by a user in some implementations, or alternate songs may be automatically suggested by the processing system to identify other songs having similar characteristics as the original song. Songs selected as alternates may be encoded or otherwise automatically formatted along with metadata 153 to create supplemental audio data 155, as described herein.

With reference now to FIG. 3, an example method 300 for creating a customized soundtrack by a media device such as receiver 110 suitably includes the broad functions of determining preferences for the current viewer (function 302), obtaining the program 150 and associated metadata 153 (function 304), comparing the viewer preference data and the metadata 153 to select a suitable replacement song (function 306); and rendering the video and selected audio to the viewer (function 308). Some or all of process 300 may be repeated as needed for any number of different songs and/or viewers (functions 312, 314), as desired.

Media device 110 determines viewer musical preferences in any manner (function 302). In various embodiments, device 110 determines the viewer preferences based upon input directly provided by the viewer, based upon information obtained from a website or other network service 142 that maintains viewer preferences, based upon an analysis of the viewer's own music library, and/or based upon any other information. In the first case, device 110 suitably provides an interface that allows the viewer to choose artists, songs, genres or other categories that are liked or disliked. These preferences are stored at device 110, as appropriate. In a simple embodiment, the viewer could express an interest in "rock" music and/or a dislike for "pop" music, for example. These preferences could be later compared to genre values (e.g., values 209) in metadata 153. Viewer preferences could similarly describe favorite (or least favorite) artists or songs, as desired.

In some implementations, device 110 is able to obtain viewer preferences from an internet music service or the like operating as a service 142 on network 109. If the viewer subscribes to a music service (e.g., ITUNES, AMAZON PRIME, PANDORA, etc.), this service may already have information relating to viewer preferences that could be shared with receiver device 110. In still other embodiments, receiver device 110 is able to directly analyze a library of songs maintained by the viewer to automatically ascertain the viewer's musical preferences. Other embodiments may obtain viewer preferences in any other manner, as desired. Various embodiments may maintain viewer preferences for multiple viewers, as desired. In such cases, one viewer may watch a particular program 150 with a certain set of songs, while another viewer may watch the same program 150 rendered by the same device 110, but with a different soundtrack according to the particular preferences of the different viewers.

Device 110 receives media program 150 and supplemental audio data 155 in any manner. Media program 150 can be received via broadcast 108, via an on-demand or similar video stream or file delivery over network 109, via a stored medium such as DVD or Blue-Ray, or via any other delivery channel as appropriate. In some embodiments, the supplemental audio data 155 can be delivered as part of the media program 150. A DVD, file download or on-demand stream, for example, could provide supplemental audio data 155 in the same disk or other bundle as the media content itself. In a broadcast media program 150, supplemental audio data 155 may be delivered as part of the MPEG or other data bundle representing the program 150, or it may be delivered separately via an EPG or other out-of-band channel on broadcast link 108, via network 109, or in any other manner.

In the case of separate delivery, data 155 may be received at any time, and according to any temporal basis. Data 155 may be obtained in batches, or in any sort of "as-needed" or "on-demand" basis, as appropriate. Batch processing could represent any technique for obtaining data 155 for multiple programs at the same time, such as providing the data 155 as part of a program guide or other regular download to receiver 110 from a broadcaster 106 or other source. Other implementations may allow receiver 110 to request the data 155 from a service 142 available via network 109 or another back channel, as desired. Such data 155 could be requested from a URL contained in a signal broadcast or the like (e.g., a URL embedded in a timed text or closed caption stream associated with program 150). Data 155 may therefore be provided automatically (e.g., as part of a regular batch download), in response to requests placed by the receiver 110, as part of a broadcast or on demand stream, and/or in any other manner as desired.

Supplemental data 155 is stored within receiver 110 until it is needed. As noted above, data 155 may be stored within memory 118, within storage medium 119, and/or in any other storage medium available to receiver 110 as desired. Alternatively, supplemental data 155 may be retrieved on an as-needed basis or the like from a network server 142 or other source, as desired.

Program content 150 is received and decoded in any suitable manner. In various embodiments, broadcast content may be received by controlling a tuner within receiver 112 to select an appropriate channel containing programming desired by the viewer; this programming is received and decoded as appropriate. In various embodiments, content is received as an MPEG or similar multiplex that includes multiple component streams each containing video, audio, timed text or closed captions, and/or other information.

Songs may be selected for inclusion in the personalized soundtrack in any manner (function 306). In various embodiments, device 110 identifies an opportunity for a replacement song through timed text/closed caption data associated with the program 150, through processing of metadata 153, or in any other manner. Song replacement may be processed prior to the viewing of media program 150 if all of the relevant preference data and metadata 153 is available; other embodiments will select songs during playback of the program 150 or at any other time that the relevant information is available to device 110.

Receiver device 110 determines the most appropriate song for the particular viewer in any manner. In various embodiments, device 110 creates a unique audio matrix 160 for the program 150 based upon the viewer's preferences. Songs may be selected for inclusion in the matrix 160 by comparing the attributes of potential replacement songs (e.g., attributes indicated within metadata 153) with the viewer's stated preferences. If a viewer prefers rock to country, for example, or does not like a particular artist, then alternate songs can be selected based upon the descriptions of the particular songs contained in metadata 153 or elsewhere.

Potential song replacements can be identified in any manner, and different embodiments may obtain replacement songs from any number of different sources, as noted above. In some embodiments, the supplemental data 155 will include a list of one or more possible replacements, and the replacement song will be selected from this list. Copies of these replacement songs may be delivered with the programming, obtained from a user library, and/or obtained separately as described above.

In other embodiments, possible song replacements may be determined based upon songs that are stored in the viewer's personal song library, or in another location available to device 110. In such embodiments, it may be desirable to have a priori knowledge of the attributes 201-211 of at least some songs in the library. Such embodiments will therefore analyze the user's library of available songs in any manner to ascertain this information. Library analysis could be performed at any time prior to the start of the song replacement process, and library song data may be updated at any frequency to reflect songs that are added or removed from the viewer's library.

During the song replacement process 306, device 110 appropriately identifies possible replacement songs that are available, and then selects a replacement that is most likely to be pleasing to the particular viewer based upon that viewer's preferences. If the song is selected from a user library, the device 110 suitably compares the attributes of possible songs with the attributes set forth in metadata 153 to identify possible matches. Device 110 may also consider any "mandatory" attributes 212 and/or limits 213 upon acceptable replacement songs, as described above.

In some embodiments, device 110 may apply a hierarchy of preferences in selecting replacement songs from amongst the various potential replacements that may be available. For example, a song obtained from the viewer's personal song library (or a song that is known to appear in the viewer's personal song library) is very likely to be pleasing to the viewer, so such songs may be the highest priority replacement selections. Of slightly less priority might be other replacement songs that match the tempo, dynamic range, emotional feel or other attributes of the original song, but that might not be present in the viewer's library. Such songs may be obtained from a network service 142 or the like, or may be contained within the supplemental data 155 as appropriate. Other embodiments may use simpler selection techniques wherein replacement songs are selected simply based upon their genre 209, or based upon the artist name 202, and/or any other factors determined to be pleasing or displeasing to the viewer. If no replacement songs are available that are more likely to be pleasing to the viewer than the original song, then the original song may be maintained as a default and rendered during playback to the viewer as appropriate.

The media program 150 is rendered for output to the viewer in any manner (function 308). In various embodiments, video signals are provided from display interface 114 to display 120 to present display imagery as appropriate; audio signals may also be provided to display 120 in some implementations, and/or separate audio signals may be output via digital, optical, analog or other outputs provided to a stereo receiver, public address system or other audio playback system, as appropriate. As noted previously, replacement audio tracks may be rendered in place of the original audio to personalize the soundtrack to the particular viewer based upon his or her preferences.

Process 300 may repeat as desired to accommodate additional songs within the program 150 (function 312), to accommodate different viewers having different preferences (function 314), to process different programs 150 on any temporal basis (e.g., batch processing, based upon real time demand, etc.), or for any other purpose.

The general process 300 may be supplemented or modified in many different ways. Some implementations could provide a user override feature 310, for example, that allows the viewer to reject the current song in favor of a more pleasing song during playback. In response to a viewer input received via a remote control, voice command (e.g., "Change it!"), touchscreen and/or other control interface, device 110 could select another song (function 306) based upon any criteria.

Other embodiments could provide a storage feature (function 311) in which a log or similar history is kept of those songs that are selected or otherwise played to the viewer. This history could include a copy of the song itself for future playback, if desired; the song may be protected with digital rights management (DRM) or similar limited access features so that the song is restricted or even disabled until the viewer pays a fee or otherwise obtains appropriate rights to gain access to the song. In other embodiments, the log simply retains a listing of songs played back so that the viewer is able to later identify songs of interest. Still other embodiments could count the number of times that a particular song is played back, and retain the count value for each song in the log. In future iterations of process 300, the song selection process (e.g., function 306) could further consider whether a song has been "overplayed", for example by comparing the number of playback times to a threshold value. If the threshold is met or exceeded, then additional plays of that same song could be avoided. Playback thresholds could be constrained by time so that the song is only played back a certain number of times per hour, per day, per week, per month, per year or the like. Playback counts could also be used to encourage playback of songs that are under-played, particularly if the song is otherwise known to be a favorite of the viewer. Further embodiments could expand the logging feature to provide a variety of different songs, to repeat favorite songs at appropriate frequencies, to avoid repetition of songs, and/or for any other purpose. Logs may be stored in memory 118, storage 119, an external or cloud drive and/or in any other data storage that is available to receiver 110, as desired.

Other embodiments of process 300 could provide feedback 314 about song selection or playback in any manner. Feedback may be provided to the viewer in some embodiments; such feedback could notify the viewer of the song titles, artists, albums and/or the like while the song is playing and/or after the media program 150 is completed. This feedback could be augmented with URLs or other active interface features to allow the viewer to complete a purchase of the song, thereby allowing downloading of the song from a music service 142, from device 110, and/or from another source as desired. Feedback 314 may make use of log data 311 described above, or any other data as desired.

Other embodiments could provide feedback 316 about the viewer's preferences and/or the songs that are selected as replacement songs for use by the program's producer, distributor, broadcaster or the like. Feedback may be very useful in selecting music for default or replacement songs in future programming, for evaluating the viewer's enjoyment of current song choices, and/or for any other purpose. The data used in song selection and playback may be collected at a server or other aggregation point and used for any purpose, as desired. Feedback data may be aggregated and delivered to a collection server on any temporal basis, as desired.

Generally speaking, the various functions and features of method 300 may be carried out with any sort of hardware, software and/or firmware logic that is stored and/or executed on any platform. Some or all of method 300 may be carried out, for example, by logic executing within receiver 110 in FIG. 1. In one embodiment, processor 116 executes software logic that performs each of the various functions shown in FIG. 3. Such logic may be stored in memory 118 or in any other storage available to processor 116 as desired. Hence, the particular logic and hardware that implements any of the various functions shown in FIG. 3 may vary from context to context, implementation to implementation, and embodiment to embodiment in accordance with the various features, scenarios and structures set forth herein. The particular means used to implement each of the various functions shown in FIG. 3, then, could be any sort of processing structures that are capable of executing conventional software logic in any format. Such processing hardware may include processor 116 or other components of receiver 110, as well as any other processors or other components associated with any conventional television, receiver, media player and/or the like.

The general systems, structures and techniques described above may be inter-combined, enhanced, modified and/or otherwise implemented to provide any number of different embodiments. Although the preceding discussion focuses primarily on broadcast sources of television, for example, equivalent embodiments could apply the same features in any other context, including any sort of satellite, cable, terrestrial or other transmittable format, as well as any sort of stored media format (e.g., DVD, including conventional DVD formats as well as any sort of BLU-RAY or other high definition disk format), streaming video format (e.g., streaming video over the Internet or another network, as well as streaming over a telephone or other wireless network), video on demand, cinema format and/or the like.

The term "exemplary" is used herein to represent one example, instance or illustration that may have any number of alternates. Any implementation described herein as "exemplary" should not necessarily be construed as preferred or advantageous over other implementations. While several exemplary embodiments have been presented in the foregoing detailed description, it should be appreciated that a vast number of alternate but equivalent variations exist, and the examples presented herein are not intended to limit the scope, applicability, or configuration of the invention in any way. To the contrary, various changes may be made in the function and arrangement of the various features described herein without departing from the scope of the claims.

## Claims

1. A method executable by a media receiver device that is operated by a viewer, the method comprising:
obtaining viewer preference data by the media receiver device that describes a musical preference of the viewer;
receiving a television channel broadcast by a broadcast source, wherein the television channel contains a television program for playback by the media receiver device, the television program comprising a video program and an audio soundtrack accompanying the video program comprising a plurality of songs;
receiving, from the broadcast source, an out-of-band channel separate from the television channel that comprises metadata associated with the television program, wherein the metadata associated with the television program comprises attributes of each of the plurality of songs in the audio soundtrack accompanying the video program, the metadata further comprising at least one mandatory attribute for each one of the plurality of songs in the audio soundtrack;
selecting, by the media receiver device, a replacement song to be rendered to the viewer during playback of the media program by comparing the viewer preference data and the metadata received via the out-of-band channel with attributes of songs in a musical library, the selected replacement song having the same at least one mandatory attribute as that of a song to be replaced in the audio soundtrack; and
providing the television program from the media receiver device for playback to the viewer with the replacement song selected based upon the viewer preference data provided in place of one of the plurality of songs in the audio soundtrack of the media program.

2. The method of claim 1,
wherein the obtaining comprises analyzing a musical library managed by the viewer to determine attributes of songs in the musical library.

3. The method of claim 1 or 2,
wherein the selecting comprises:
selecting the replacement song from a musical library managed by the viewer by comparing the metadata to the determined attributes of the songs in the musical library.

4. The method of Claim 1, 2 or 3, wherein the selecting comprises:
selecting a plurality of potential replacement songs from a musical library managed by the viewer by comparing the metadata to the determined attributes of the songs in the musical library, and wherein the selecting further comprises selecting one of the plurality of potential replacement songs as the replacement song based upon the viewer preference data.

5. The method of one of the preceding claims,
wherein the selected song from the musical library is identified as a potential replacement song in the metadata.

6. The method of one of the preceding claims,
wherein the media program is received with a matrix of songs, and wherein the metadata comprises attributes of each of the songs in the matrix to thereby permit the media receiver device to select one of the songs in the matrix for rendering to the viewer based upon the viewer preference data in place of the one of the plurality of songs in the audio soundtrack of the media program.

7. The method of claim 6, wherein the songs are delivered to the media receiver device with the metadata.

8. The method of one of the preceding claims, further comprising updating a log that maintains a count of a number of times that the replacement song has been provided to the viewer.

9. A media receiver device to process media content for viewing on a display by a viewer, the media receiver device comprising:
a receiver interface configured to receive a television channel broadcast by a broadcast source, wherein the television channel contains a television program for playback by the media receiver device, the television program comprising a video program and an audio soundtrack accompanying the video program comprising a plurality of songs, and wherein the metadata associated with the television program is received from the broadcast source via an out-of-band channel that is separate from the television channel, wherein the metadata associated with the television program comprises attributes of each of the plurality of songs in the audio soundtrack accompanying the video program, the metadata further comprising at least one mandatory attribute for each one of the plurality of songs in the audio soundtrack;
a controller configured to obtain viewer preference data that describes a musical preference of the viewer and to select a replacement song by comparing the viewer preference data and the metadata received via the out-of-band channel with attributes of songs in a musical library, the selected replacement song having the same at least one mandatory attribute as that of a song to be replaced in the audio soundtrack; and
a display interface configured to provide the television program from the media receiver device for playback to the viewer, wherein the media program is provided with the replacement song selected based upon the viewer preference data in place of one of the plurality of songs in the audio soundtrack of the media program.

10. The media receiver device of claim 9,
wherein the metadata is delivered to the media receiver device separately from the television program.

11. The media receiver device of claim 9 or 10,
wherein the replacement song is selected from a musical library managed by the viewer by comparing the metadata to the determined attributes of the songs in the musical library.

12. The media receiver device of one of the claims 9 to 11,
wherein a plurality of potential replacement songs is selected from a musical library managed by the viewer by comparing the metadata to the determined attributes of the songs in the musical library, and wherein the replacement song is selected from the plurality of potential replacement songs based upon the viewer preference data.

13. The media receiver device of one of claims 9 to 12,
wherein the processor is configured to update a log that maintains a count of a number of times that the replacement song has been provided to the viewer; and/ or
wherein the processor is configured to update a log that maintain s a listing of replacement songs.

## Patentansprüche

1. Verfahren, das von einer Medienempfängervorrichtung ausgeführt werden kann, die von einem Zuseher betrieben wird, wobei das Verfahren umfasst:
Erhalten von Zuseherpräferenzdaten durch die Medienempfängervorrichtung, die eine musikalische Präferenz des Zusehers beschreiben;
Empfangen eines Fernsehkanalrundfunks durch eine Rundfunkquelle, wobei der Fernsehkanal ein Fernsehprogramm zur Wiedergabe durch die Medienempfängervorrichtung enthält, wobei das Fernsehprogramm ein Videoprogramm und eine das Videoprogramm begleitende Audiotonspur umfasst, die eine Vielzahl von Liedern umfasst;
Empfangen, von der Rundfunkquelle, eines Kanals außerhalb des Bandes getrennt von dem Fernsehkanal, der Metadaten umfasst, die dem Fernsehprogramm zugehörig sind, wobei die dem Fernsehprogramm zugehörigen Metadaten Attribute von jedem der Vielzahl von Liedern in der das Videoprogramm begleitenden Audiotonspur umfassen, wobei die Metadaten weiter mindestens ein zwingend notwendiges Attribut für jedes der Vielzahl von Liedern in der Audiotonspur umfassen;
Auswählen, durch die Medienempfängervorrichtung, eines Ersatzliedes, das währen Wiedergabe des Medienprogramms zu dem Zuseher gerendert wird, indem die Zuseherpräferenzdaten und die Metadaten, die über den Kanal außerhalb des Bandes empfangen werden, mit Attributen von Liedern in einer Musikbibliothek verglichen werden, wobei das ausgewählte Ersatzlied dasselbe mindestens eine zwingend notwendige Attribut wie das eines in der Audiotonspur zu ersetzenden Liedes aufweist; und
Bereitstellen des Fernsehprogramms von der Medienempfängervorrichtung zur Wiedergabe an den Zuseher mit dem Ersatzlied, das basierend auf den bereitgestellten Zuseherpräferenzdaten ausgewählt ist, anstelle eines der Vielzahl von Liedern in der Audiotonspur des Medienprogramms.

2. Verfahren nach Anspruch 1,
wobei das Erhalten Analysieren einer Musikbibliothek umfasst, die von dem Zuseher verwaltet wird, um Attribute von Liedern in der Musikbibliothek zu ermitteln.

3. Verfahren nach Anspruch 1 oder 2,
wobei das Auswählen umfasst:
Auswählen des Ersatzliedes aus einer Musikbibliothek, die von dem Zuseher verwaltet wird, indem die Metadaten mit den ermittelten Attributen der Lieder in der Musikbibliothek verglichen werden.

4. Verfahren nach Anspruch 1, 2 oder 3, wobei das Auswählen umfasst:
Auswählen einer Vielzahl von potenziellen Ersatzliedern aus einer Musikbibliothek, die von dem Zuseher verwaltet wird, indem die Metadaten mit den ermittelten Attributen der Lieder in der Musikbibliothek verglichen werden und wobei das Auswählen weiter Auswählen eines der Vielzahl von potenziellen Ersatzliedern als das Ersatzlied, basierend auf den Zuseherpräferenzdaten umfasst.

5. Verfahren nach einem der vorangehenden Ansprüche,
wobei das ausgewählte Lied von der Musikbibliothek als ein potenzielles Ersatzlied in den Metadaten identifiziert ist.

6. Verfahren nach einem der vorangehenden Ansprüche,
wobei das Medienprogramm mit einer Matrix von Liedern empfangen wird und wobei die Metadaten Attribute von jedem der Lieder in der Matrix umfassen, um dadurch der Medienempfängervorrichtung zu gestatten, eines der Lieder in der Matrix zum Rendern an den Zuseher, basierend auf den Zuseherpräferenzdaten, anstelle des einen der Vielzahl von Liedern in der Audiotonspur des Medienprogramms auszuwählen.

7. Verfahren nach Anspruch 6, wobei die Lieder mit den Metadaten an die Medienempfängervorrichtung übermittelt werden.

8. Verfahren nach einem der vorangehenden Ansprüche, weiter umfassend Aktualisieren eines Protokolls, das eine Zählung einer Häufigkeit führt, mit der das Ersatzlied an den Zuseher bereitgestellt wurde.

9. Medienempfängervorrichtung, um Medieninhalt zum Betrachten auf einer Anzeige durch einen Zuseher zu verarbeiten, wobei die Medienempfängervorrichtung umfasst:
eine Empfängerschnittstelle, die konfiguriert ist, einen Fernsehkanalrundfunk von einer Rundfunkquelle zu empfangen, wobei der Fernsehkanal ein Fernsehprogramm zur Wiedergabe durch die Medienempfängervorrichtung enthält, das Fernsehprogramm ein Videoprogramm und eine das Videoprogramm begleitende Audiotonspur umfasst, die eine Vielzahl von Liedern umfasst, und wobei die dem Fernsehprogramm zugehörigen Metadaten von der Rundfunkquelle über einen Kanal außerhalb des Bandes empfangen werden, das von dem Fernsehkanal getrennt ist, wobei die dem Fernsehprogramm zugehörigen Metadaten Attribute von jedem der Vielzahl von Liedern in der das Videoprogramm begleitenden Tonspur umfassen, wobei die Metadaten weiter mindestens ein zwingend notwendiges Attribut für jedes der Vielzahl von Liedern in der Audiotonspur umfassen;
ein Steuergerät, das konfiguriert ist, Zuseherpräferenzdaten zu erhalten, die eine Musikpräferenz des Zusehers beschreiben, und ein Ersatzlied auszuwählen, indem die Zuseherpräferenzdaten und die über den Kanal außerhalb des Bandes empfangenen Metadaten mit Attributen von Liedern in einer Musikbibliothek verglichen werden, wobei das ausgewählte Ersatzlied dasselbe mindestens eine zwingend notwendige Attribut wie das eines in der Audiotonspur zu ersetzenden Liedes aufweist; und
eine Anzeigeschnittstelle, die konfiguriert ist, das Fernsehprogramm von der Medienempfängervorrichtung zur Wiedergabe an den Zuseher bereitzustellen, wobei das Medienprogramm mit dem Ersatzlied, das basierend auf den Zuseherpräferenzdaten ausgewählt wird, anstelle von einem der Vielzahl von Liedern in der Audiotonspur des Medienprogramms bereitgestellt wird.

10. Medienempfängervorrichtung nach Anspruch 9,
wobei die Metadaten getrennt von dem Fernsehprogramm an die Medienempfängervorrichtung übermittelt werden.

11. Medienempfängervorrichtung nach Anspruch 9 oder 10,
wobei das Ersatzlied aus einer Musikbibliothek ausgewählt wird, die von dem Zuseher verwaltet wird, indem die Metadaten mit den ermittelten Attributen der Lieder in der Musikbibliothek verglichen werden.

12. Medienempfängervorrichtung nach einem der Ansprüche 9 bis 11,
wobei eine Vielzahl von potenziellen Ersatzliedern aus einer Musikbibliothek ausgewählt ist, die von dem Zuseher verwaltet wird, indem die Metadaten mit den ermittelten Attributen der Lieder in der Musikbibliothek verglichen werden und wobei das Ersatzlied aus der Vielzahl von potenziellen Ersatzliedern, basierend auf den Zuseherpräferenzdaten ausgewählt ist.

13. Medienempfängervorrichtung nach einem der Ansprüche 9 bis 12,
wobei der Prozessor konfiguriert ist, ein Protokoll zu aktualisieren, das eine Zählung einer Häufigkeit führt, mit der das Ersatzlied an den Zuseher bereitgestellt wurde; und/oder
wobei der Prozessor konfiguriert ist, ein Protokoll zu aktualisieren, dass eine Auflistung von Ersatzliedern führt.

## Revendications

1. Procédé exécutable par un dispositif récepteur multimédia qui est utilisé par un spectateur, le procédé comprenant :
l'obtention de données de préférences de spectateur par le dispositif récepteur multimédia décrivant une préférence musicale du spectateur ;
la réception d'une chaîne de télévision diffusée par une source de diffusion, dans lequel la chaîne de diffusion contient un programme de télévision pour une lecture par le dispositif récepteur multimédia, le programme de télévision comprenant un programme vidéo et une bande-son accompagnant le programme vidéo comprenant une pluralité de chansons ;
la réception, en provenance de la source de diffusion, d'une chaîne hors bande distincte de la chaîne de télévision qui comprend des métadonnées associées au programme de télévision, dans lequel les métadonnées associées au programme de télévision comprennent des attributs de chacune de la pluralité de chansons dans la bande-son accompagnant le programme vidéo, les métadonnées comprenant en outre au moins un attribut obligatoire pour chacune de la pluralité de chansons dans la bande-son ;
la sélection, par le dispositif récepteur multimédia, d'une chanson de remplacement devant être rendue au spectateur au cours d'une lecture du programme multimédia par la comparaison des données de préférences de spectateur et des métadonnées reçues par l'intermédiaire de la chaîne hors bande à des attributs de chansons dans une bibliothèque musicale, la chanson de remplacement sélectionnée ayant le même au moins un attribut obligatoire que celui d'une chanson à remplacer dans la bande-son ; et
la fourniture du programme de télévision depuis le dispositif récepteur multimédia pour une lecture au spectateur avec la chanson de remplacement sélectionnée sur la base des données de préférences de spectateur fournies à la place de l'une de la pluralité de chansons dans la bande-son du programme multimédia.

2. Procédé selon la revendication 1,
dans lequel l'obtention comprend l'analyse d'une bibliothèque musicale gérée par le spectateur pour déterminer des attributs de chansons dans la bibliothèque musicale.

3. Procédé selon la revendication 1 ou 2,
dans lequel la sélection comprend :
la sélection de la chanson de remplacement depuis une bibliothèque musicale gérée par le spectateur par la comparaison des métadonnées aux attributs déterminés des chansons dans la bibliothèque musicale.

4. Procédé selon la revendication 1, 2 ou 3, dans lequel la sélection comprend :
la sélection d'une pluralité de chansons de remplacement potentielles depuis une bibliothèque musicale gérée par le spectateur par la comparaison des métadonnées aux attributs déterminés des chansons dans la bibliothèque musicale, et dans lequel la sélection comprend en outre la sélection de l'une de la pluralité de chansons de remplacement potentielles en tant que la chanson de remplacement sur la base des données de préférences de spectateur.

5. Procédé selon l'une des revendications précédentes,
dans lequel la chanson sélectionnée depuis la bibliothèque musicale est identifiée en tant qu'une chanson de remplacement potentielle dans les métadonnées.

6. Procédé selon l'une des revendications précédentes,
dans lequel le programme multimédia est reçu avec une matrice de chansons, et dans lequel les métadonnées comprennent des attributs de chacune des chansons dans la matrice pour permettre de ce fait au dispositif récepteur multimédia de sélectionner l'une des chansons dans la matrice pour un rendu au spectateur sur la base des données de préférences de spectateur à la place de l'une de la pluralité de chansons dans la bande-son du programme multimédia.

7. Procédé selon la revendication 6, dans lequel les chansons sont délivrées au dispositif récepteur multimédia avec les métadonnées.

8. Procédé selon l'une des revendications précédentes, comprenant en outre la mise à jour d'un journal qui maintient un compte d'un nombre de fois que la chanson de remplacement a été fournie au spectateur.

9. Dispositif récepteur multimédia pour traiter un contenu multimédia pour une visualisation sur un affichage par un spectateur, le dispositif récepteur multimédia comprenant :
1. une interface de récepteur configurée pour la réception d'une chaîne de télévision diffusée par une source de diffusion, dans lequel la chaîne de télévision contient un programme de télévision pour une lecture par le dispositif récepteur multimédia, le programme de télévision comprenant un programme vidéo et une bande-son accompagnant le programme vidéo comprenant une pluralité de chansons, et dans lequel les métadonnées associées au programme de télévision sont reçues en provenance de la source de diffusion par l'intermédiaire d'une chaîne hors bande distincte de la chaîne de télévision, dans lequel les métadonnées associées au programme de télévision comprennent des attributs de chacune de la pluralité de chansons dans la bande-son accompagnant le programme vidéo, les métadonnées comprenant en outre au moins un attribut obligatoire pour chacune de la pluralité de chansons dans la bande-son ;
un organe de commande configuré pour l'obtention de données de préférences de spectateur qui décrivent une préférence musicale du spectateur et pour la sélection d'une chanson de remplacement par la comparaison des données de préférences de spectateur et des métadonnées reçues par l'intermédiaire de la chaîne hors bande à des attributs de chansons dans une bibliothèque musicale, la chanson de remplacement sélectionnée ayant le même au moins un attribut obligatoire que celui d'une chanson à remplacer dans la bande-son ; et
une interface d'affichage configurée pour la fourniture du programme de télévision depuis le dispositif récepteur multimédia pour une lecture au spectateur, dans lequel le programme multimédia est fourni avec la chanson de remplacement sélectionnée sur la base des données de préférences de spectateur à la place de l'une de la pluralité de chansons dans la bande-son du programme multimédia.

10. Dispositif récepteur multimédia selon la revendication 9,
dans lequel les métadonnées sont délivrées au dispositif récepteur multimédia distinctement du programme de télévision.

11. Dispositif récepteur multimédia selon la revendication 9 ou 10,
dans lequel la chanson de remplacement est sélectionnée depuis une bibliothèque musicale gérée par le spectateur par la comparaison des métadonnées aux attributs déterminés des chansons dans la bibliothèque musicale.

12. Dispositif récepteur multimédia selon l'une des revendications 9 à 11,
dans lequel une pluralité de chansons de remplacement potentielles est sélectionnée depuis une bibliothèque musicale gérée par le spectateur par la comparaison des métadonnées aux attributs déterminés des chansons dans la bibliothèque musicale, et dans lequel la chanson de remplacement est sélectionnée parmi la pluralité de chansons de remplacement potentielles sur la base des données de préférences de spectateur.

13. Dispositif récepteur multimédia selon l'une des revendications 9 à 12,
dans lequel le processeur est configuré pour la mise à jour d'un journal qui maintient un compte d'un nombre de fois que la chanson de remplacement a été fournie au spectateur ; et/ou
dans lequel le processeur est configuré pour la mise à jour d'un journal qui maintient une liste de chansons de remplacement.
